# EUROPEAN PATENT SPECIFICATION

(11) **EP 4 331 253 B1**
(45) Date of publication and mention of the grant of the patent: **17.09.2025**
(21) Application number: 22724644.4
(22) Date of filing: 25.04.2022
(51) Int. Cl.: H04W 12/30, G06Q 20/32, H04W 4/60, H04W 12/42, H04W 8/18, H04L 9/40, G06Q 20/34, H04W 8/20

(54) **PAYMENT SOLUTION, ESPECIALLY DIGITAL PAYMENT SOLUTION**
ZAHLUNGSLÖSUNG, INSBESONDERE DIGITALE ZAHLUNGSLÖSUNG
SOLUTION DE PAIEMENT, EN PARTICULIER SOLUTION DE PAIEMENT NUMÉRIQUE

(30) Priority: 26.04.2021 DE 102021002193
(43) Date of publication of application: 06.03.2024
(73) Proprietor: Giesecke+Devrient ePayments GmbH, 81677 München (DE)
(72) Inventor: GHOSH, Ranjan, Bengaluru (IN)
(74) Representative: Giesecke+Devrient IP
(86) International application number: PCT/EP2022/025178
(87) International publication number: WO 2022/228726

(56) References cited:
- US-A1- 2012 231 844
- US-B2- 10 198 728

## Description

### Field of the invention

The present invention relates to the field of payment solutions, especially digital payment solutions such as digital payment cards implemented in mobile devices.

### Background of the invention

Physical payment cards including a payment chip are in the market for a long time, and payment cards using a magnetic stripe even longer. Physical payment cards are produced in a card manufacturer card production infrastructure by personalization of the cards with personalization data received from a card issuer, such as a bank or a payment scheme provider, and further card production data.

The personalization data can comprise for example one or several of the following: (i) personal data - such as name - of a future holder of the payment card, i.e. client of the card issuer, (ii) payment card credentials, such as a card number - e.g. the primary account number PAN -, secret keys for authentication of payment transactions to be effected with the payment card once the card is issued to the card holder, and (iii) payment applications or applets. Some of the personalization data such as card holder name, PAN and the mandatory keys are mandatory, others are optional. Card production data can comprise data for chip personalization, for card body printing and embossing and for magnetic stripe programming. The personalized payment cards are each enveloped together with a client letter and sent to the respective card holder, i.e. card issuer client, via postal services. In a separate PIN letter, the payment card PIN code is sent to the card holder. From the time a card issuer client orders a payment card at the card issuer until the time the card issuer client actually receives the payment card and the PIN letter, a considerable amount of time can pass.

Digital payment solutions, such as digital payment cards, for example payment applets making used of payment card credentials, implemented in mobile devices are gaining increasing importance. A mobile device is understood as a device having functionality to communicate in a mobile or radio communication network, such as a Smartphone or Smartwatch which are also classified as Consumer devices, or an M2M mobile network device. Current digital payment solutions usually exist in addition to and separately from physical payment cards.

### Prior Art

US2016088464A1 of the prior art discloses an eUICC storing a plurality of profiles, wherein each profile represents a subscriber identity module for a mobile network operator, and applications, each associated with one of the plurality of profiles.

WO2017201908A1 of the prior art discloses a method of loading and storing, to a security domain of an eUICC, a key application program associated with a bank card and key data. The key data can comprise an encryption and decryption key, a signing key or a password. For loading to the security domain of the eUICC and authentication, a GSMA SM-SR is used.

GSMA Technical Specification SGP.02 V4.1 - GSMA SGP.02 Remote Provisioning Architecture for Embedded UICC Technical Specification, Version 4.1, 05 June 2020 - discloses in chapter 3.1 a method for profile download and installation to an eUICC, including a mutual authentication procedure according to chapter 3.1.2, and a download and installation procedure according to chapter 3.1.3, and is intended for eUICCs hosted in M2M mobile devices.

GSMA Technical Specification SGP.22 V2.2.2, chapter 3.1 Remote Provisioning - GSMA SGP.22 RSP Technical Specification, Version 2.2.2, 05 June 2020 - discloses in chapter 3.1 a method for profile download and installation to an eUICC, including a mutual authentication procedure according to chapter 3.1.2, and a download and installation procedure according to chapter 3.1.3, and is intended for eUICCs hosted in consumer mobile devices, such as Smartphones or Smartwatches.

Document US10198728B2 from the prior art discloses a method and system for transferring payment credentials from a portable payment device of a user, such as a magnetic stripe card or chipcard, over a point of sales device and a remotely accessible server finally back to a UICC hosted in a mobile device of said user. In detail, US10198728B2 discloses receiving, at a point of sales device, payment credentials from a portable payment device, such as a magnetic stripe card or chipcard, presented by a customer at said point of sales device, and for forwarding the payment credentials received from the portable payment device to a remotely accessible server. The payment credentials are then provisioned from the remotely accessible server to the UICC of the mobile device.

### Objective of the invention

It is an object of the present invention to provide a provisioning solution that allows to provision a payment solution to a user in a fast, flexible and user-friendly way.

### Summary of the invention

In greater detail, the object of the invention is achieved by a payment solution provisioning system with following features according to claim 1, which defines the scope of protection of the invention. Embodiments of the invention are presented in dependent claims.

The payment solution provisioning system is characterized by a payment card credential transfer interface means between a payment card production system and a remote SIM provisioning system, and by a payment card credential storage at the remote SIM provisioning system, storing payment card credentials received at the remote SIM provisioning system from the payment card production system, storing such that the payment card credentials can be downloaded to an eUICC the way normally subscription profiles are downloaded to an eUICC. The payment card credentials stored and/or implemented in the eUICC are a digital payment solution. The same payment card credentials personalized into a physical payment card at the payment card production system are a physical payment solution in form of a physical payment card. Both together build a combined digital and physical payment solution. The RSP infrastructure comprises payment card credential download means constructed to receive payment card credential download requests, and in reply to a received payment card credential download request, to download payment card credentials corresponding to the payment card credential download request to a eUICC.

The payment solution provisioning system has several advantages. First, payment card credentials can be used identically in a physical payment card and in a digital payment card established in the eUICC by downloading the payment card credentials to the eUICC, and in parallel producing a physical payment card with the same payment card credentials. Second, the card holder for which the payment card credentials are destined can receive the digital payment solution / digital payment card established by the payment card credentials in the eUICC in a very fast manner, even before the physical payment card is received, and possibly even before the physical payment card is even produced. Third, the remote SIM provisioning infrastructures for downloading subscription profiles, such as according to SGP.02 or SGP.22, are well elaborated and accepted in the market. Therefore, the download of payment card credentials to the eUICC can be effected without requiring an own download infrastructure, however can benefit of procedures, particularly authentication, download and installation procedures, of remote SIM provisioning, for example as described in SGP.02 or SGP.22. Fourth, when the user desires to receive payment card credentials to an eUICC, so as to establish a digital payment solution in the eUICC, the user can use the established user-friendly ways offered for subscription profile download for example in SGP.02 or SGP.22, particularly for a consumer device for example one of the three ways of chapter 3.1.3, option (a) (Activation Code), (b) (SM-DS) or (c) (Default SM-DP+).

A mobile device according to the present invention hosts an eUICC. According to the invention, the mobile device comprises a payment application comprising a payment card credential interface which is constructed to send to a SIM provisioning system, via an RSP infrastructure, a payment card credential download request, and to manage receipt of requested payment card credentials from the SIM provisioning system, via the RSP infrastructure, and to store the received payment card credentials to the eUICC. The user can, by the inventive payment application, download payment card credentials in a similar way that allows today already to download subscription profiles to eUICCs.

Thus, the invention provides a provisioning solution that allows to provision a payment solution to a user in a fast, flexible and user-friendly way.

Preferably the payment card download request includes an identifier that assures that the correct payment card credentials are downloaded to the eUICC for which the user requested a physical payment card. The RSP infrastructure comprises a physical link - which can be wireless or wired - operable between the SIM provisioning infrastructure (e.g. SM-DP+ or SM-SR) and eUICC allowing download of profiles and payment card credentials.

Preferably, the payment card credential storage is provided incorporated in a data generation system provided in the Data Preparation server or Data Preparation Plus server. In relation to subscription profiles, the data generation system processes profile data such as the authentication key Ki and the international mobile subscriber identifier IMSI with a profile description so as to generate a profile package which can be downloaded to an eUICC.

Preferably, the data generation system is constructed to process payment card credentials stored in the payment card credential storage together with a payment card description, so as to generate a payment card package which can be downloaded to the eUICC, so as to install in the eUICC a digital payment solution, particularly a digital payment card. The payment card description is preferably structured similarly to a profile description, such that the data generation system can create a package for a digital payment solution, particularly a digital payment card, to be installed in the eUICC, similarly as the known data generation system generates a profile package by which a subscription profile can be installed in the eUICC. Details of profile package generation are described in SGP.02 or SGP.22 or in in documents referenced in SGP.02 or SGP.22.

Preferably, the payment card credentials stored on the payment card credential storage and downloaded to the eUICC are accompanied by a payment card applet also stored on the payment card credential storage and downloaded and installed to the eUICC such that the payment card applet makes use of the payment card credentials in payment transactions. Preferably, the payment card credentials stored in the eUICC are identical to payment card credentials used to produce a physical payment card.

Preferably, the received payment card credentials are stored in the eUICC in such a way that the payment card credentials stored in the eUICC can be used for payments in a similar way to a payment card produced from the payment card credentials. Preferably also a payment card applet is stored to the eUICC, and the payment card credentials are used by the payment card applet. The payment card applet together with the payment card credentials preferably build a digital payment solution or digital payment card.

The eUICC to which the payment card credentials are installed can have any form factor, for example plug-in SIM card, embedded eUICC which is made for soldering into a mobile device and otherwise partly similar to a plug-in SIM card, or integrated iUICC integrated into a chipset of the mobile device.

### Brief description of the drawings

Embodiments of the invention will now be described with reference to the drawings, throughout which like parts are referred to by like references, and in which represents:
- Fig. 1: a schematic diagram of a payment solution provisioning system, according to an embodiment of the invention;
- Fig. 2: a chart showing providing of payment card credentials from a payment card production system to a SIM provisioning system via a payment card credential transfer interface, followed by a mobile device requesting download of the payment card credentials to an eUICC and finally download of the payment card credentials to the eUICC, according to an embodiment of the invention;
- Fig. 3: a mobile device hosting an eUICC and comprising a payment application comprising a payment card credential interface, according to an embodiment of the invention.

### Detailed description of the invention

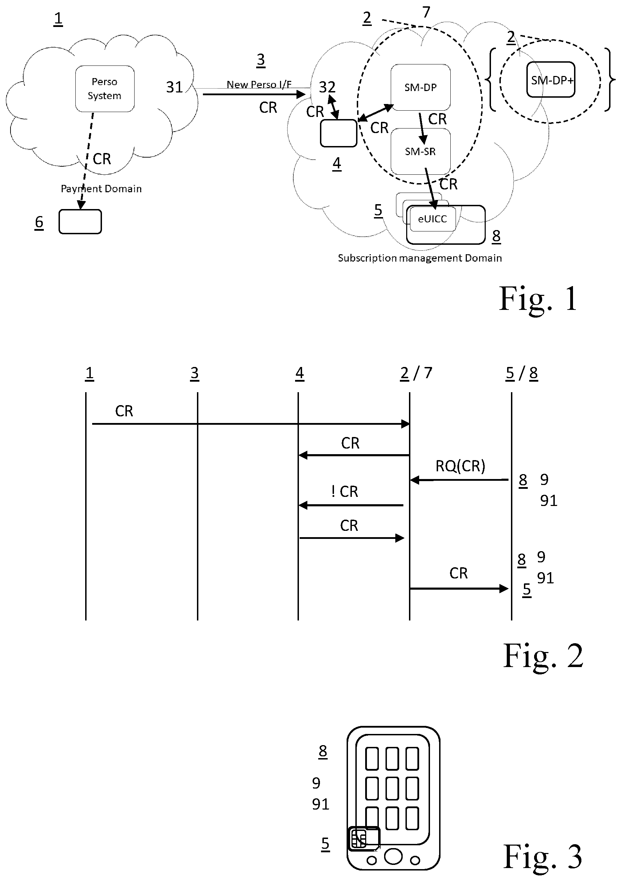

Fig. 1 shows a schematic diagram of a payment solution provisioning system, according to an embodiment of the invention. The payment solution provisioning system comprises a payment card production system 1 comprising at least a payment card personalization server constructed to personalize physical payment cards, like the payment card 6 shown in Fig. 1.

The payment solution provisioning system further comprises a remote SIM provisioning system 2 comprising an RSP infrastructure 7 constructed to provide subscription profiles to eUICCs 5. The SIM provisioning system 2 comprises at least: either (i) a subscription management Data Preparation server SM-DP and a subscription management Secure Router server SM-SR, for example according to GSMA SGP.02, or alternatively a subscription management Data Preparation Plus server SM-DP+, for example according to GSMA SGP.22. The subscription management Data Preparation Plus server SM-DP+ preferably essentially combines both functionalities of a subscription management Data Preparation server and a subscription management Secure Router server in one server system.

The payment solution provisioning system is characterized by a payment card credential transfer interface means 3 between the payment card production system 1 and the remote SIM provisioning system 2, and by a payment card credential storage 4.

The interface means 3 comprises a payment card production side interface section 31 constructed to provide payment card credentials CR, provided in the payment card production system 1 for production of a physical payment card 6, to the remote SIM provisioning system 2. The interface means 3 further comprises a remote SIM provisioning system side interface section 32 constructed to receive payment card credentials CR provided by a payment card production system 1 at the payment card production side interface 31.

The payment card credential storage 4 is provided in the or connected to the or connectable to the remote SIM provisioning system 2, and is constructed to store the payment card credentials CR, which are or have been received via the payment card credential transfer interface means 3. The payment card credential storage 4 stores the payment card credentials CR in such a way that the payment card credentials CR can be provided to eUICCs 5 via the RSP infrastructure 7 of the remote SIM provisioning system 2 via which subscription profiles are provided to eUICCs 5.

Fig. 2 shows a chart showing providing of payment card credentials CR from a payment card production system 1 to a SIM provisioning system 2 via a payment card credential transfer interface 3, followed by a mobile device 8 requesting download of the payment card credentials CR to an eUICC 5, and finally download of the payment card credentials CR to the eUICC 5, according to an embodiment of the invention.

Fig. 3 shows a mobile device 8, embodied as a Smartphone, with an eUICC 5 hosted in the mobile device 8. The eUICC is depicted as a plug-in SIM card. The mobile device 8 comprises a payment application 9 comprising a payment card credential interface 91. The payment application 9 with its payment card credential interface 91 is constructed to send to a SIM provisioning system 2, via an RSP infrastructure 7, a payment card credential download request RQ(CR). The RSP infrastructure 7 receives the payment card credential download request RQ(CR) and feeds it into the SIM provisioning system 2. The SIM provisioning system 2 analyses the request RQ(CR) and retrieves from the payment card credential storage 4 payment card credentials CR matching with the payment card credential download request RQ(CR), provides the retrieved payment card credentials CR on the SM-DP+ or SM-SR or similar server for download to the eUICC 5, and downloads the payment card credentials CR from the SM-DP+ or SM-SR or similar server to the eUICC 5 via the mobile device 8. At the mobile device 8, the payment application 9 with its payment card credential interface 91 receives and manages the requested payment card credentials CR from the SIM provisioning system 2 and initiates storage and installation of the received payment card credentials CR to the eUICC 5.

### Reference signs

- 1: payment card system
- 2: remote SIM provisioning system
- 3: payment card credential transfer interface
- 31: payment card production side interface section
- 32: remote SIM provisioning system side interface section
- 4: payment card credential storage
- 5: eUICC
- 6: physical payment card
- 7: RSP infrastructure
- 8: mobile device
- 9: payment application in the mobile device
- 91: payment card credential interface of the payment application 9

### Cited prior art

US2016088464A1
WO2017201908A1
SGP.02 V4.1, chapter 3.1 Profile Download and Installation - GSMA SGP.02 Remote Provisioning Architecture for Embedded UICC Technical Specification, Version 4.1, 05 June 2020 SGP.22 V2.2.2, chapter 3.1 Remote Provisioning - GSMA SGP.22 RSP Technical Specification, Version 2.2.2, 05 June 2020

## Claims

1. A payment solution provisioning system comprising:
2) A remote SIM provisioning system (2) comprising an RSP infrastructure (7) constructed to provide subscription profiles to eUICCs (5), and comprising at least:
a subscription management Data Preparation server (SM-DP) and a subscription management Secure Router server (SM-SR), or alternatively a subscription management Data Preparation Plus server (SM-DP+) and a link connectable to eUICCs (5);
profile download means constructed to receive and process profile download requests, and in reply to a received profile download request, to download a subscription profile to a eUICC (5) corresponding to the profile download request;
1) A payment card production system (1) comprising at least: a payment card personalization server constructed to personalize physical payment cards;
3) A payment card credential transfer interface (3) means comprising:
3.1) A payment card production side interface section (31) constructed to provide payment card credentials (CR), provided in the payment card production system (1) for production of a physical payment card (6), to the remote SIM provisioning system (2); and
3.2) A remote SIM provisioning system side interface section (32) constructed to receive payment card credentials (CR) provided by a payment card production system (1) at the payment card production side interface (31); and
4) A payment card credential storage (4), provided in the or connected to the or connectable to the remote SIM provisioning system (2), the payment card credential storage (4) constructed to store the payment card credentials (CR), received via the payment card credential transfer interface means (3), in a way that the payment card credentials (CR) can be provided to eUICCs (5) via the RSP infrastructure (7) of the remote SIM provisioning system (2) via which subscription profiles are provided to eUICCs (5);
the RSP infrastructure (7) comprising payment card credential download means constructed to receive payment card credential download requests, and in reply to a received payment card credential download request, to download payment card credentials (CR) corresponding to the payment card credential download request to a eUICC (5);
the downloaded payment card credentials (CR) received and stored in the eUICC being identical to payment card credentials (CR) used to produce a physical payment card (6) in the payment card production system (1).

2. The payment solution provisioning system according to claim 1, wherein the payment card credentials (CR) stored on the payment card credential storage (4) and downloaded to the eUICC (5) are accompanied by a payment card applet also stored on the payment card credential storage (4) and downloaded and installed to the eUICC such that the payment card applet makes use of the payment card credentials in payment transactions.

3. The payment solution provisioning system according to any of claims 1 to 2, wherein the payment card credential storage (4) is provided integrally with a data generation system provided in the Data Preparation server (SM-DP) or Data Preparation Plus server (SM-DP+).

4. The payment solution provisioning system according to claim 3, wherein the data generation system is constructed to process payment card credentials (CR) stored in the payment card credential storage (4) together with a payment card description, so as to generate a payment card package which can be downloaded to the eUICC (5), so as to install in the eUICC (5) a digital payment solution or digital payment card.

5. The payment solution provisioning system according to any of claims 1 to 4, further comprising a mobile device hosting the eUICC, the mobile device (8) comprising a payment application (9) comprising a payment card credential interface (91) constructed to send to a SIM provisioning system (2), via an RSP infrastructure (7), a payment card credential download request (RQ(CR)), and to manage receipt of requested payment card credentials (CR) from the SIM provisioning system (2), via the RSP infrastructure (7), and to store and/or install the received payment card credentials (CR) to the eUICC (5).

## Patentansprüche

1. Zahlungslösungsbereitstellungssystem, das Folgendes umfasst:
2) ein Remote-SIM-Bereitstellungssystem (2), das eine RSP-Infrastruktur (7) umfasst, die dazu ausgebildet ist, Abonnementprofile für eUICCs (5) bereitzustellen, und das mindestens Folgendes umfasst:
einen Abonnementverwaltungs-Data-Preparation-Server (SM-DP-Server) und einen Abonnementverwaltungs-Secure-Router-Server (SM-SR-Server) oder alternativ einen Abonnementverwaltungs-Data-Preparation-Plus-Server (SM-DP+-Server) und eine Verbindung, die mit eUICCs (5) verbunden werden kann;
Profildownloadmittel, die dazu ausgebildet sind, Profildownloadanforderungen zu empfangen und zu verarbeiten und als Antwort auf eine empfangene Profildownloadanforderung ein Abonnementprofil auf eine eUICC (5) herunterzuladen, die der Profildownloadanforderung entspricht;
1) ein Zahlungskartenherstellungssystem (1), das mindestens Folgendes umfasst: einen Zahlungskartenpersonalisierungsserver, der zum Personalisieren physischer Zahlungskarten ausgebildet ist;
3) ein Schnittstellenmittel (3) zur Übertragung von Zahlungskartenberechtigungsnachweisen, das Folgendes umfasst:
3.1) einen zahlungskartenherstellungsseitigen Schnittstellenabschnitt (31), der dazu ausgebildet ist, Zahlungskartenberechtigungsnachweise (CR), die in dem Zahlungskartenherstellungssystem (1) zur Herstellung einer physischen Zahlungskarte (6) bereitgestellt werden, an das Remote-SIM-Bereitstellungssystem (2) bereitzustellen; und
3.2) einen remote-SIM-bereitstellungssystemseitigen Schnittstellenabschnitt (32), der dazu ausgebildet ist, Zahlungskartenberechtigungsnachweise (CR) zu empfangen, die von einem Zahlungskartenherstellungssystem (1) an der zahlungskartenherstellungsseitigen Schnittstelle (31) bereitgestellt werden; und
4) einen Zahlungskartenberechtigungsnachweisspeicher (4), der in dem Remote-SIM-Bereitstellungssystem (2) vorgesehen oder mit diesem verbunden oder mit diesem verbindbar ist, wobei der Zahlungskartenberechtigungsnachweisspeicher (4) dazu ausgebildet ist, die Zahlungskartenberechtigungsnachweise (CR), die über das Schnittstellenmittel (3) zur Übertragung von Zahlungskartenberechtigungsnachweisen empfangen werden, in einer Weise zu speichern, dass die Zahlungskartenberechtigungsnachweise (CR) über die RSP-Infrastruktur (7) des Remote-SIM-Bereitstellungssystems (2), über die die Abonnementprofile für eUICCs (5) bereitgestellt werden, für eUICCs (5) bereitgestellt werden können;
wobei die RSP-Infrastruktur (7) Zahlungskartenberechtigungsnachweis-Downloadmittel umfasst, die dazu ausgelegt sind, Zahlungskartenberechtigungsnachweis-Downloadanforderungen zu empfangen und als Antwort auf eine empfangene Zahlungskartenberechtigungsnachweis-Downloadanforderung Zahlungskartenberechtigungsnachweise (CR), die der Zahlungskartenberechtigungsnachweis-Downloadanforderung entsprechen, auf eine eUICC (5) herunterzuladen;
die auf der eUICC empfangenen und gespeicherten heruntergeladenen Zahlungskartenberechtigungsnachweise (CR) identisch mit den Zahlungskartenbenachrichtigungsnachweisen (CR) sind, die zum Herstellen einer physischen Zahlungskarte (6) in dem Zahlungskartenherstellungssystem (1) verwendet werden.

2. Zahlungslösungsbereitstellungssystem nach Anspruch 1, wobei die in dem Zahlungskartenberechtigungsnachweisspeicher (4) gespeicherten und auf die eUICC (5) heruntergeladenen Zahlungskartenberechtigungsnachweise (CR) von einem Zahlungskartenapplet begleitet werden, das ebenfalls in dem Zahlungskartenberechtigungsnachweisspeicher (4) gespeichert und auf die eUICC heruntergeladen und darauf installiert ist, so dass das Zahlungskartenapplet die Zahlungskartenberechtigungsnachweise bei Zahlungstransaktionen verwendet.

3. Zahlungslösungsbereitstellungssystem nach einem der Ansprüche 1 bis 2, wobei der Zahlungskartenberechtigungsnachweisspeicher (4) integral mit einem Datenerzeugungssystem versehen ist, das in dem Data-Preparation-Server (SM-DP-Server) oder dem Data-Preparation-Plus-Server (SM-DP+-Server) vorgesehen ist.

4. Zahlungslösungsbereitstellungssystem nach Anspruch 3, wobei das Datenerzeugungssystem dazu ausgebildet ist, in dem Zahlungskartenberechtigungsnachweisspeicher (4) gespeicherte Zahlungskartenberechtigungsnachweise (CR) zusammen mit einer Zahlungskartenbeschreibung zu verarbeiten, um ein Zahlungskartenpaket zu erzeugen, das auf die eUICC (5) heruntergeladen werden kann, um auf der eUICC (5) eine digitale Zahlungslösung oder digitale Zahlungskarte zu installieren.

5. Zahlungslösungsbereitstellungssystem nach einem der Ansprüche 1 bis 4, ferner umfassend eine mobile Vorrichtung, die die eUICC hostet, wobei die mobile Vorrichtung (8) eine Zahlungsanwendung (9) umfasst, die eine Zahlungskartenberechtigungsnachweisschnittstelle (91) umfasst, die dazu ausgelegt ist, über eine RSP-Infrastruktur (7) eine Zahlungskartenberechtigungsnachweis-Downloadanforderung (RQ(CR)) an ein SIM-Bereitstellungssystem (2) zu senden und den Empfang angeforderter Zahlungskartenberechtigungsnachweise (CR) von dem SIM-Bereitstellungssystem (2) über die RSP-Infrastruktur (7) zu verwalten, und die empfangenen Zahlungskartenberechtigungsnachweise (CR) auf der eUICC (5) zu speichern und/oder zu installieren.

## Revendications

1. Système de provisionnement de solution de paiement, comprenant :
2) un système de provisionnement SIM à distance (2) comprenant une infrastructure RSP (7) construite pour fournir des profils d'abonnement à des eUICCs (5), et comprenant au moins :
un serveur gestion d'abonnement-préparation de données (SM-DP) et un serveur gestion d'abonnement-routeur sécurisé (SM-SR), ou en variante un serveur gestion d'abonnement préparation de données-plus (SM-DP+) et une liaison connectable à des eUICCs (5) ;
des moyens de téléchargement de profil construits pour recevoir et traiter des demandes de téléchargement de profil, et en réponse à une demande de téléchargement de profil reçue, pour télécharger un profil d'abonnement sur un eUICC (5) correspondant à la demande de téléchargement de profil ;
1) un système de production de carte de paiement (1) comprenant au moins : un serveur de personnalisation de carte de paiement construit pour personnaliser des cartes de paiement physiques ;
3) des moyens d'interface de transfert de justificatifs de carte de paiement (3) comprenant :
3.1) une section d'interface côté production de carte de paiement (31) construite pour fournir des justificatifs de carte de paiement (CR), fournis dans le système de production de carte de paiement (1) pour la production d'une carte de paiement physique (6), au système de provisionnement SIM à distance (2) ; et
3.2) une section d'interface côté système de provisionnement SIM à distance (32) construite pour recevoir des justificatifs de carte de paiement (CR) fournis par un système de production de carte de paiement (1) au niveau de l'interface côté production de carte de paiement (31) ; et
4) un stockage de justificatifs de carte de paiement (4), prévu dans le, ou connecté au, ou connectable au, système de provisionnement SIM à distance (2), le stockage de justificatifs de carte de paiement (4) étant construit pour stocker les justificatifs de carte de paiement (CR), reçus par l'intermédiaire des moyens d'interface de transfert de justificatifs de carte de paiement (3), d'une manière telle que les justificatifs de carte de paiement (CR) peuvent être fournis à des eUICCs (5) par l'intermédiaire de l'infrastructure RSP (7) du système de provisionnement SIM à distance (2) par l'intermédiaire de laquelle des profils d'abonnement sont fournis à des eUICCs (5) ;
l'infrastructure RSP (7) comprenant des moyens de téléchargement de justificatifs de carte de paiement construits pour recevoir des demandes de téléchargement de justificatifs de carte de paiement, et en réponse à une demande reçue de téléchargement de justificatifs de carte de paiement, pour télécharger des justificatifs de carte de paiement (CR) correspondant à la demande de téléchargement de justificatifs de carte de paiement sur un eUICC (5) ;
les justificatifs de carte de paiement téléchargés (CR) reçus et stockés dans le eUICC étant identiques à des justificatifs de carte de paiement (CR) utilisés pour produire une carte de paiement physique (6) dans le système de production de carte de paiement (1).

2. Système de provisionnement de solution de paiement selon la revendication 1, dans lequel les justificatifs de carte de paiement (CR) stockés sur le stockage de justificatifs de carte de paiement (4) et téléchargés sur le eUICC (5) sont accompagnés par un applet de carte de paiement également stocké sur le stockage de justificatifs de carte de paiement (4) et téléchargé et installé sur le eUICC de manière telle que l'applet de carte de paiement utilise les justificatifs de carte de paiement dans des transactions de paiement.

3. Système de provisionnement de solution de paiement selon de quelconques des revendications 1 et 2, dans lequel le stockage de justificatifs de carte de paiement (4) est prévu de façon intégrale avec un système de génération de données prévu dans le serveur préparation de données (SM-DP) ou le serveur préparation de données plus (SM-DP+).

4. Système de provisionnement de solution de paiement selon la revendication 3, dans lequel le système de génération de données est construit pour traiter des justificatifs de carte de paiement (CR) stockés dans le stockage de justificatifs de carte de paiement (4) conjointement avec une description de carte de paiement, afin de générer un progiciel de carte de paiement qui peut être téléchargé sur le eUICC (5), afin d'installer, dans le eUICC (5), une solution de paiement numérique ou une carte de paiement numérique.

5. Système de provisionnement de solution de paiement selon de quelconques des revendications 1 à 4, comprenant en outre un dispositif mobile hébergeant le eUICC, le dispositif mobile (8) comprenant une application de paiement (9) comprenant une interface de justificatifs de carte de paiement (91) construite pour envoyer, à un système de provisionnement SIM (2), par l'intermédiaire d'une infrastructure RSP (7), une demande de téléchargement de justificatifs de carte de paiement (RQ(CR)), et pour générer la réception de justificatifs de carte de paiement (CR) demandés en provenance du système de provisionnement SIM (2), par l'intermédiaire de l'infrastructure RSP (7), et pour stocker et/ou installer les justificatifs de carte de paiement (CR) reçus sur le eUICC (5).
